# EUROPEAN PATENT APPLICATION

(11) **EP 4 640 441 A1**
(43) Date of publication of application: **29.10.2025**
(21) Application number: 23907021.2
(22) Date of filing: 19.12.2023
(51) Int. Cl.: B41J 11/70, B65H 39/16

(54) **LAMINATING DEVICE**

(30) Priority: 23.12.2022 JP 2022207477
(71) Applicant: BROTHER KOGYO KABUSHIKI KAISHA, Nagoya-shi, Aichi 467-8561 (JP)
(72) Inventor: WANG, Yuwen, Nagoya-shi, Aichi 467-8562 (JP); OOKA, Kazuaki, Nagoya-shi, Aichi 467-8562 (JP); SAKAI, Ryosuke, Nagoya-shi, Aichi 467-8562 (JP)
(74) Representative: J A Kemp LLP
(86) International application number: PCT/JP2023/045433
(87) International publication number: WO 2024/135661

(57) **Abstract**

Provided is means for reducing contact of an adhesive layer of a member, which is to be laminated, with a component in a laminating unit. A laminating device 1 includes a laminating unit 50 configured to overlap and laminate a plurality of members, a conveying unit 20 configured to convey the plurality of members to the laminating unit 50, and a controller 90. The controller 90 is configured to cause the laminating unit 50 to execute lamination in a state where a first member 101, a portion of a second member 102 including a tailing end 122 of the second member 102, and a portion of a third member 103 including a leading end 123 of the third member 103 overlap.

## Description

### TECHNICAL FIELD

The present invention relates to a laminating device for laminating a plurality of members.

### BACKGROUND ART

Patent Literature 1 describes a device for manufacturing a printed matter. In this device, a printing unit forms a printed image on a recording medium drawn out from a recording medium roll. The recording medium on which the printed image is formed is cut to a predetermined length by a first cutting unit, conveyed to a laminating unit, and overlaps with a laminating member drawn out from a laminating member roll by a guide roll in the laminating unit. The recording medium and the laminating member overlapping with each other are heated by a pressure heating roll, and cut off by a second cutting unit.

### CITATION LIST

### PATENT LITERATURE

Patent Literature 1: JP2003-211593A

### SUMMARY OF INVENTION

### TECHNICAL PROBLEM

There is a laminating device in which a first member drawn out from a first roll, a second member conveyed, and a third member conveyed after the second member is conveyed are laminated by a laminating unit including a pair of rollers. In a case where the first member drawn out from the first roll has an adhesive layer on a lamination surface, when no member is in contact with the lamination surface of the first member, the adhesive layer of the first member may come into contact with one of the rollers of the laminating unit, and an operation abnormality may occur in the laminating device.

The present invention has been made in view of the above circumstances, and an object of the present invention is to provide means capable of reducing contact of an adhesive layer of a member, which is to be laminated, with a component in a laminating unit.

### SOLUTION TO PROBLEM

(1) A laminating device according to the present invention includes: a laminating unit configured to overlap and laminate a plurality of members; a conveying unit configured to convey the plurality of members to the laminating unit; and a controller. The controller is configured to cause the laminating unit to execute lamination in a state where a first member, a portion of a second member including a tailing end of the second member, and a portion of a third member including a leading end of the third member overlap.
   According to the laminating device, in a case where the first member has an adhesive layer on a lamination surface and the second member and the third member are bonded to the lamination surface of the first member, lamination is executed in which the portion of the second member including the tailing end of the second member and the portion of the third member including the leading end of the third member located upstream of the second member in a conveyance direction overlap, so that no gap is formed between the second member and the third member, and contact of the adhesive layer of the first member with a component in the laminating unit can be reduced.
(2) Preferably, the laminating device may further include a first sensor unit configured to detect the tailing end of the second member, in which the controller may be configured to cause the tailing end of the second member to stop at a position to which the second member is conveyed by a predetermined feed amount from a position where the first sensor unit detects the tailing end of the second member.
(3) Preferably, the laminating device may further include a second sensor unit configured to detect the leading end of the third member, in which the controller may be configured to cause an operation of the laminating unit to start after the third member is conveyed by a predetermined feed amount from a position where the second sensor unit detects the leading end of the third member.
(4) Preferably, the laminating unit may include a roller pair, the roller pair including a first roller and a second roller.
(5) Preferably, the laminating unit may be configured to laminate the first member, the second member, and the third member in a state where the first member, the second member, and the third member overlap in an order of the first member, the second member, and the third member between the first roller and the second roller.
(6) Preferably, the laminating unit may be configured to laminate the first member, the second member, and the third member in a state where the first member, the second member, and the third member overlap in an order of the first member, the third member, and the second member between the first roller and the second roller.
(7) Preferably, an angle formed by a direction in which the first member is conveyed toward the laminating unit and a direction in which a member obtained by laminating the first member, the second member, and the third member is conveyed from the laminating unit may be an obtuse angle.
(8) Preferably, an angle formed by a direction in which the second member and the third member are conveyed toward the laminating unit and a direction in which a member obtained by laminating the first member, the second member, and the third member is conveyed from the laminating unit may be an obtuse angle.
(9) Preferably, an acute angle formed by a horizontal direction and a direction of a line segment connecting a center of the first roller and a center of the second roller may be in a range of 40° to 75°.
(10) Preferably, the laminating device may further include a first guide unit configured to contact lamination surfaces of the second member and the third member, which are to be laminated to the first member, and guide the second member and the third member toward the laminating unit.
(11) Preferably, a space allowing the tailing end of the second member having passed through the first guide unit to float may be located between the first guide unit and the laminating unit.
(12) Preferably, the laminating device may further include a second guide unit configured to contact a lamination surface of the first member and guide the first member toward the laminating unit.
(13) Preferably, the laminating device may further include a cutting unit on a downstream side of the laminating unit, the cutting unit being configured to cut a member obtained by laminating the first member, the second member, and the third member, and the cutting unit may be configured to cut a portion of the member other than a portion where all of the first member, the second member, and the third member overlap.
(14) Preferably, the second member and the third member may be transparent films, and the laminating device may further include a recording unit configured to record an image on the third member.
(15) Preferably, the laminating device may further include a driving unit configured to drive the second roller, and the first roller may be a driven roller that does not directly receive power from the driving unit.
(16) Preferably, the laminating device may further include a driving unit configured to drive the first roller and the second roller.
(17) A laminating device according to the present invention includes: a laminating unit including a roller configured to overlap and laminate a plurality of members; a conveying unit including a first conveying unit configured to convey a first member to the laminating unit and a second conveying unit configured to convey a second member and a third member to the laminating unit; and a controller. The controller is configured to: execute a first laminating operation including causing the first conveying unit to convey the first member to the laminating unit, causing the second conveying unit to convey the second member to the laminating unit, and laminating the first member and the second member; cause, after the first laminating operation, the second conveying unit to convey the third member such that a leading end of the third member approaches a tailing end of the second member while the first member and the second member are held by the laminating unit; and execute, after causing the third member to be conveyed, a second laminating operation including laminating the first member and the third member.
   According to the laminating device, in a case where the first member has an adhesive layer on a lamination surface, and the second member and the third member are bonded to the lamination surface of the first member, the first member and the second member are laminated, the leading end of the third member is brought close to the tailing end of the second member while the first member and the second member are held by the laminating unit, and the first member and the third member are laminated, so that a gap between the second member and the third member is reduced, and contact of the adhesive layer of the first member with a component in the laminating unit can be reduced. In this configuration, all of the first member, the second member, and the third member may not necessarily overlap.
(18) Preferably, the controller may be configured to: cause, in the first laminating operation, an operation of the laminating unit to stop after the first member and a first portion of the second member are laminated, the first portion including a leading end of the second member; and execute, in the second laminating operation, lamination of the first member and a second portion of the second member, the second portion being a portion of the second member excluding the first portion, and lamination of the first member and the third member, such that the laminations are executed in a continuous operation.

### ADVANTAGEOUS EFFECTS OF INVENTION

According to the present invention, it is possible to reduce contact of an adhesive layer of a member, which is to be laminated, with a component in a laminating unit.

### BRIEF DESCRIPTION OF DRAWINGS

[FIG. 1] FIG. 1A is a perspective view of an external appearance of a laminating device 1 according to an embodiment of the present invention, and FIG. 1B is a schematic cross-sectional view of a laminate finished product 100 prepared by the laminating device 1.
[FIG. 2] FIG. 2 is a longitudinal sectional view of the laminating device 1.
[FIG. 3] FIG. 3 is a block diagram of the laminating device 1.
[FIG. 4] FIG. 4 is a flowchart illustrating a process executed by a controller 90 of the laminating device 1.
[FIG. 5] FIG. 5A is a diagram illustrating a state in which a leading end 123 of a third member 103 is brought close to a tailing end 122 of a second member 102 in the laminating device 1, and FIG. 5B is a view illustrating a laminating order in a laminating unit 50 of the laminating device 1.
[FIG. 6] FIG. 6A is a diagram illustrating directions D1 to D4 in the laminating device 1, FIG. 6B is a diagram illustrating an angle θ1 formed by the direction D1 and the direction D3 and an angle θ2 formed by the direction D2 and the direction D3, and FIG. 6C is a diagram illustrating an acute angle θ3 formed by a horizontal direction DH and the direction D4.
[FIG. 7] FIG. 7 is a diagram illustrating an operation of a second cutting unit 70 of the laminating device 1.
[FIG. 8] FIG. 8 is a longitudinal sectional view of a laminating device 2 according to a modification.
[FIG. 9] FIG. 9 is a diagram illustrating a laminating order in a laminating unit 50 of the laminating device 2.

### DESCRIPTION OF EMBODIMENTS

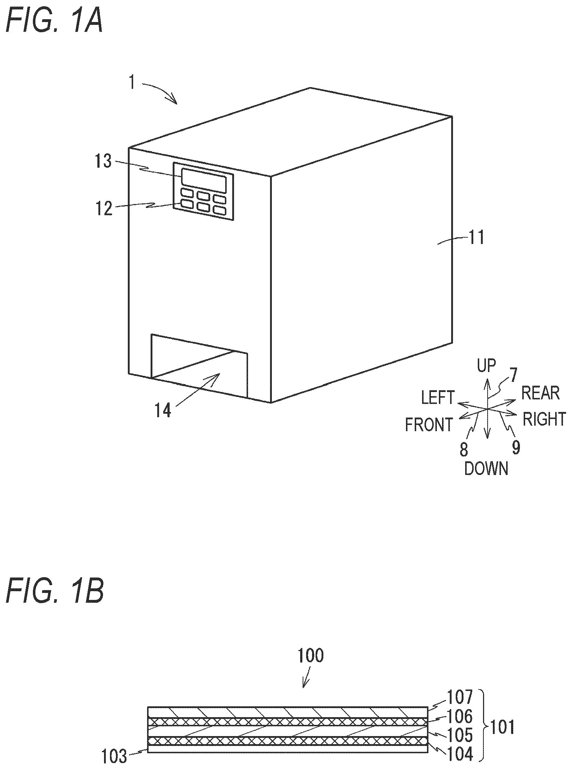

Hereinafter, a laminating device 1 according to an embodiment of the present invention will be described. The embodiment described below is merely an example of the present invention, and it is needless to say that the embodiment of the present invention can be appropriately modified without departing from the gist of the present invention. In the following description, advancement from a start point to an end point of an arrow is expressed as an orientation, and movement on a line connecting the start point and the end point of the arrow is expressed as a direction. In addition, an up-down direction 7 is defined based on a state in which the laminating device 1 is installed in a usable manner (state in FIG. 1A), a front-rear direction 8 is defined with a surface on which an operation unit 12 and a display unit 13 are provided as a front surface, and a left-right direction 9 is defined when the laminating device 1 is viewed from the front. The up-down direction 7, the front-rear direction 8, and the left-right direction 9 are orthogonal to each other.

### [Outline of Laminating Device 1]

As illustrated in FIG. 1A, the laminating device 1 according to the present embodiment includes a rectangular parallelepiped housing 11. The operation unit 12 and the display unit 13 are located on a front surface of the housing 11. On the front surface of the housing 11, a discharge port 14 is located below the operation unit 12 and the display unit 13. The laminating device 1 prepares a laminate finished product 100 by laminating two types of members.

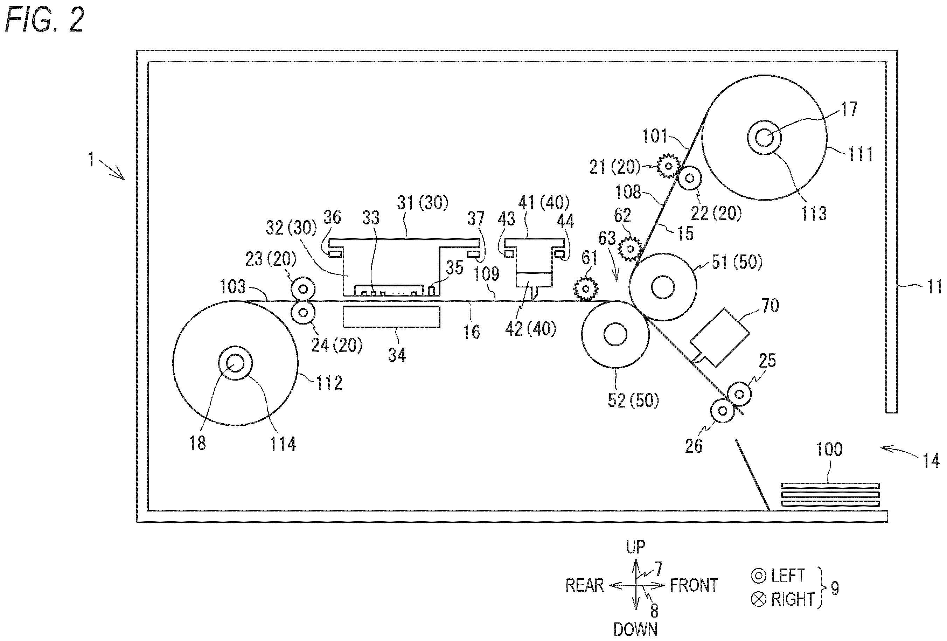

To the laminating device 1, a tape-shaped first member 101 and a tape-shaped third member 103 are supplied. As illustrated in FIG. 2, the first member 101 is wound around a cylindrical core material 113 to form a first roll 111. The third member 103 is wound around a cylindrical core material 114 to form a second roll 112. The first roll 111 and the second roll 112 are attached to a first holder 17 and a second holder 18 of the laminating device 1, respectively.

The third member 103 is, for example, a transparent film. As illustrated in FIG. 1B, the first member 101 is a member having an adhesive layer on at least one surface. The first member 101 is, for example, a mount having a first adhesive layer 104 on one surface of a tape layer 105 (a surface on a third member 103 side in the laminate finished product 100) and a second adhesive layer 106 on the other surface of the tape layer 105. A release sheet 107 is provided on a side opposite to the tape layer 105 with the second adhesive layer 106 interposed therebetween.

A material of the first member 101 and the third member 103 is optional. The first member 101 may be, for example, a member made of resin such as PET or PVC (vinyl chloride), synthetic paper such as YUPO paper (registered trademark), or a member made of metal. The first member 101 may be transparent or opaque. The first member 101 may have an adhesive layer on one surface and not have an adhesive layer on the other surface. In addition, the first member 101 may have the first adhesive layer 104 formed on the one surface after being drawn out from the first roll 111.

In FIG. 2, a lamination surface 108 is a surface of surfaces of the first member 101 on a side having the first adhesive layer 104. The lamination surface 109 is a surface of surfaces of the third member 103 on a lamination surface 108 side of the first member 101. The lamination surface 109 is also a recording surface on which an image is recorded.

The laminating device 1 laminates the first member 101 and the third member 103 by bringing the lamination surface 108 of the first member 101 and the lamination surface 109 of the third member 103 into close contact with each other. The laminating device 1 cuts the laminated members into a predetermined size. Thus, the laminate finished product 100 illustrated in FIG. 1B is prepared. The prepared laminate finished product 100 is discharged from the discharge port 14.

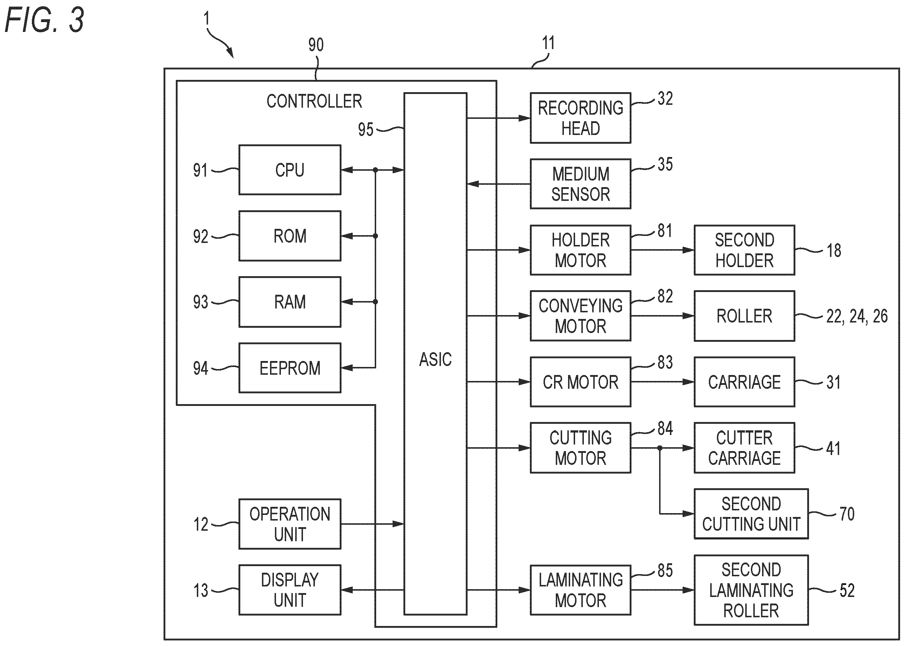

As illustrated in FIG. 2, the laminating device 1 includes a conveying unit 20, a recording unit 30, a cutting unit 40, a laminating unit 50, a first guide member 61, a second guide member 62, and a second cutting unit 70 inside the housing 11. In addition, the laminating device 1 includes a controller 90 and various types of motors inside the housing 11 (see FIG. 3). A guide member (not illustrated) that supports the first member 101 and the third member 103 is provided at a necessary position in the housing 11. Thus, a conveying path 15 extending from the first holder 17 to the second cutting unit 70 via the laminating unit 50 and a conveying path 16 extending from the second holder 18 to the second cutting unit 70 via the recording unit 30, the cutting unit 40, and the laminating unit 50 are formed.

### [First Holder 17 and Second Holder 18]

The first holder 17 and the second holder 18 are members rotatable about an axis extending in the left-right direction 9. A thickness of the first holder 17 is equal to an inner diameter of the core material 113 of the first roll 111. A thickness of the second holder 18 is equal to an inner diameter of the core material 114 of the second roll 112. The first holder 17 and the second holder 18 are fixed to the housing 11 or to a member fixed to the housing 11.

The first holder 17 and the second holder 18 are located at positions separated from each other in the housing 11. In a configuration illustrated in FIG. 2, the first holder 17 is located at an upper side in the housing 11 in the up-down direction 7 and at a front side in the housing 11 in the front-rear direction 8. The second holder 18 is located below a center of the housing 11 in the up-down direction 7 and at a rear side in the housing 11 in the front-rear direction 8. Positions of the first holder 17 and the second holder 18 in the housing 11 are optional.

Before the laminating device 1 operates, the first roll 111 is attached to the first holder 17, and the second roll 112 is attached to the second holder 18. The first holder 17 rotatably supports the first roll 111. The second holder 18 rotatably supports the second roll 112. The first member 101 is drawn out from the first roll 111 supported by the first holder 17. The third member 103 is drawn out from the second roll 112 supported by the second holder 18.

The second holder 18 receives a driving force from a holder motor 81 (see FIG. 3) and rotates in a predetermined orientation (counterclockwise orientation in FIG. 2). Accordingly, the third member 103 drawn out from the second roll 112 is rewound around the second roll 112.

### [Conveying Unit 20]

The conveying unit 20 includes a first draw-out roller 21, a second draw-out roller 22, a third draw-out roller 23, and a fourth draw-out roller 24. In addition, the laminating unit 50 also functions as the conveying unit 20. The first draw-out roller 21 and the second draw-out roller 22 form a roller pair, and draw out the first member 101 from the first roll 111. The third draw-out roller 23 and the fourth draw-out roller 24 form another roller pair, and draw out the third member 103 from the second roll 112.

The first draw-out roller 21 and the second draw-out roller 22 are located in the vicinity of the first roll 111. In the configuration illustrated in FIG. 2, the first draw-out roller 21 and the second draw-out roller 22 are located behind the first roll 111 in the front-rear direction 8. The first draw-out roller 21 is located above the second draw-out roller 22 in the up-down direction 7 and behind the second draw-out roller 22 in the front-rear direction 8. The first member 101 drawn out from the first roll 111 passes between the first draw-out roller 21 and the second draw-out roller 22. In this case, the first draw-out roller 21 comes into contact with the lamination surface 108 of the first member 101, and the second draw-out roller 22 comes into contact with a surface (back surface) of the first member 101 opposite to the lamination surface 108. The first draw-out roller 21 is, for example, a spur roller. Alternatively, a portion of the first draw-out roller 21 that comes into contact with the first member 101 may be processed to be easily separated from the first adhesive layer 104 of the first member 101.

The third draw-out roller 23 and the fourth draw-out roller 24 are located in the vicinity of the second roll 112. In the configuration illustrated in FIG. 2, the third draw-out roller 23 and the fourth draw-out roller 24 are located in front of the second roll 112 in the front-rear direction 8. The third draw-out roller 23 is located directly above the fourth draw-out roller 24 in the up-down direction 7. The third member 103 drawn out from the second roll 112 passes between the third draw-out roller 23 and the fourth draw-out roller 24. In this case, the third draw-out roller 23 comes into contact with the lamination surface 109 of the third member 103, and the fourth draw-out roller 24 comes into contact with a surface (back surface) of the third member 103 opposite to the lamination surface 109.

The second draw-out roller 22 and the fourth draw-out roller 24 receive a driving force from a conveying motor 82 (see FIG. 3) and rotate about an axis extending in the left-right direction 9. The first draw-out roller 21 and the third draw-out roller 23 rotate respectively about an axis extending in the left-right direction 9 as the second draw-out roller 22 and the fourth draw-out roller 24 rotate. A second laminating roller 52 (described later) included in the laminating unit 50 receives a driving force from a laminating motor 85 (see FIG. 3) and rotates about an axis extending in the left-right direction 9. A first laminating roller 51 (described later) rotates about an axis extending in the left-right direction 9 as the second laminating roller 52 rotates. Accordingly, the first member 101 is conveyed along the conveying path 15, and the third member 103 is conveyed along the conveying path 16. In this manner, the conveying unit 20 conveys a plurality of members to the laminating unit 50.

The first draw-out roller 21, the second draw-out roller 22, and the laminating unit 50 represent an example of a first conveying unit that conveys the first member 101 to the laminating unit 50. The third draw-out roller 23, the fourth draw-out roller 24, and the laminating unit 50 represent an example of a second conveying unit that conveys a second member 102 (described later) and the third member 103 to the laminating unit 50.

### [Recording Unit 30]

The recording unit 30 is located on a downstream side of the conveying path 16 with respect to the second roll 112. The recording unit 30 is located above the conveying path 16 in the up-down direction 7 and between the second roll 112 and the cutting unit 40 in the front-rear direction 8. The recording unit 30 includes a carriage 31 and a recording head 32. Two guide rails 36 and 37 extending in the left-right direction 9 and having both ends fixed to the housing 11 or to a member fixed to the housing 11 are located inside the housing 11. The carriage 31 is placed above the guide rails 36 and 37. The carriage 31 receives a driving force from a CR motor 83 (see FIG. 3) and moves in the left-right direction 9.

The recording head 32 is mounted on the carriage 31. A plurality of nozzles 33 are formed on a lower surface of the recording head 32. As the carriage 31 moves, the recording head 32 moves in the left-right direction 9. A platen 34 is located below a movement range of the carriage 31. The recording head 32 ejects ink from the nozzles 33 while moving in the left-right direction 9. Accordingly, an image is recorded on the lamination surface 109 which is also a recording surface of the third member 103 conveyed above the platen 34. In this manner, the recording unit 30 records an image on the third member 103 drawn out from the second roll 112.

A medium sensor 35 is mounted on the carriage 31. The medium sensor 35 includes a light emitting element and a light receiving element (both not illustrated). The light emitting element emits light downward from a lower surface of the recording head 32. The light receiving element receives light emitted from the light emitting element and reflected by the platen 34 or the third member 103 conveyed above the platen 34. An amount of the light received by the light receiving element changes depending on whether the third member 103 is present above the platen 34. Therefore, end portions of the second member 102 and the third member 103 can be detected by the medium sensor 35. The medium sensor 35 is an example of a first sensor unit and a second sensor unit.

### [Cutting Unit 40]

The cutting unit 40 is located on a downstream side of the conveying path 16 with respect to the recording unit 30. The cutting unit 40 is located above the conveying path 16 in the up-down direction 7 and between the recording unit 30 and the laminating unit 50 in the front-rear direction 8. The cutting unit 40 includes a cutter carriage 41 and a cutter 42. Two guide rails 43 and 44 having the same configurations as those of the guide rails 36 and 37 are located inside the housing 11. The cutter carriage 41 is placed above the guide rails 43 and 44. The cutter carriage 41 receives a driving force from a cutting motor 84 (see FIG. 3) and moves in the left-right direction 9.

The cutter 42 is provided below the cutter carriage 41. As the cutter carriage 41 moves, the cutter 42 moves in the left-right direction 9. For example, when the cutter carriage 41 moves in a predetermined orientation (for example, rightward) along the left-right direction 9, the cutter 42 cuts the third member 103 conveyed to the cutting unit 40. In this manner, the cutting unit 40 cuts the third member 103 on which the image is recorded by the recording unit 30.

### [laminating unit 50]

The laminating unit 50 is located on a downstream side of the conveying path 16 with respect to the cutting unit 40. The laminating unit 50 is located between the cutting unit 40 and the second cutting unit 70 in the front-rear direction 8. The laminating unit 50 includes the first laminating roller 51 and the second laminating roller 52. The first laminating roller 51 is located above the second laminating roller 52 in the up-down direction 7 and in front of the second laminating roller 52 in the front-rear direction 8 with an interval corresponding to a thickness of the laminate finished product 100.

The first member 101 drawn out from the first roll 111 enters between the first laminating roller 51 and the second laminating roller 52. In this case, the lamination surface 108 of the first member 101 faces rearward and downward. The third member 103 that passes through the recording unit 30 and the cutting unit 40 enters under the first member 101 between the first laminating roller 51 and the second laminating roller 52. In this case, the lamination surface 109 of the third member 103 faces forward and upward.

As described above, the second laminating roller 52 receives a driving force from the laminating motor 85 (see FIG. 3) and rotates about an axis extending in the left-right direction 9. The first laminating roller 51 is a driven roller and rotates about an axis extending in the left-right direction 9 as the second laminating roller 52 rotates. The first laminating roller 51 and the second laminating roller 52 laminate the first member 101 and the third member 103 by bringing the lamination surface 108 of the first member 101 and the lamination surface 109 of the third member 103 into close contact with each other.

The second laminating roller 52 is driven by the laminating motor 85. The second laminating roller 52 is an example of a first roller. The first laminating roller 51 is a driven roller that does not directly receive power from the laminating motor 85. The first laminating roller 51 is an example of a second roller. Details of the laminating unit 50 will be described later.

### [First Guide Member 61 and Second Guide Member 62]

The first guide member 61 is located prior to the laminating unit 50 along the conveying path 16. The first guide member 61 is located at substantially the same position as the laminating unit 50 in the up-down direction 7 and behind the laminating unit 50 in the front-rear direction 8. The first guide member 61 comes into contact with the lamination surface 109 of the third member 103 that passes through the recording unit 30 and the cutting unit 40, and guides the second member 102 and the third member 103 toward the laminating unit 50. The first guide member 61 is, for example, a spur roller. The first guide member 61 is an example of a first guide unit.

The second guide member 62 is located prior to the laminating unit 50 along the conveying path 15. The second guide member 62 is located above the laminating unit 50 in the up-down direction 7 and at substantially the same position as the laminating unit 50 in the front-rear direction 8. The second guide member 62 comes into contact with the lamination surface 108 of the first member 101 drawn out from the first roll 111 and guides the first member 101 toward the laminating unit 50. The second guide member 62 is, for example, a spur roller. The second guide member 62 is an example of a second guide unit.

### [Second Cutting Unit 70]

The second cutting unit 70 is located on a downstream side of the conveying paths 15 and 16 with respect to the laminating unit 50. The second cutting unit 70 is located below the laminating unit 50 in the up-down direction 7 and in front of the laminating unit 50 in the front-rear direction 8. The second cutting unit 70 cuts a member obtained by laminating the first member 101, the second member 102, and the third member 103. The second cutting unit 70 has any configuration capable of cutting the laminated member. Similarly to the cutting unit 40, the second cutting unit 70 may have a configuration including a cutter carriage that moves in the left-right direction 9 and a cutter, or may have a configuration including a moving blade that moves in a direction orthogonal to a member to be cut and a fixed blade that faces the moving blade. The second cutting unit 70 is an example of a cutting unit.

### [First Discharge Roller 25 and Second Discharge Roller 26]

A first discharge roller 25 and a second discharge roller 26 form a discharge roller pair. The first discharge roller 25 and the second discharge roller 26 are located below the second cutting unit 70 in the up-down direction 7 and in front of the second cutting unit 70 in the front-rear direction 8. The first discharge roller 25 is located above the second discharge roller 26 in the up-down direction 7 and in front of the second discharge roller 26 in the front-rear direction 8 with an interval corresponding to the thickness of the laminate finished product 100.

The second discharge roller 26 receives a driving force from the conveying motor 82 and rotates about an axis extending in the left-right direction 9. The first discharge roller 25 rotates about an axis extending in the left-right direction 9 as the second discharge roller 26 rotates. A member that passes through the second cutting unit 70 passes between the first discharge roller 25 and the second discharge roller 26, and is discharged from the discharge port 14.

### [Controller 90 and Peripheral Unit thereof]

As illustrated in FIG. 3, the controller 90 includes a CPU 91, a ROM 92, a RAM 93, and an EEPROM 94. The ROM 92 stores programs for controlling various operations of the laminating device 1. The EEPROM 94 stores various kinds of data used when the programs are executed. The RAM 93 is used as a storage area for temporarily recording the various kinds of data used when the CPU 91 executes the programs, and a loading area for data and programs. When the laminating device 1 is powered on, the programs stored in the ROM 92 are copied and transferred to the RAM 93. The CPU 91 executes the programs stored in the RAM 93. Thus, the controller 90 executes various kinds of controls.

The operation unit 12 and the display unit 13 are connected to the ASIC 95. The operation unit 12 detects pressing of an operation key and outputs a signal corresponding to the pressed operation key. The controller 90 identifies the pressed operation key based on the signal output from the operation unit 12. The display unit 13 displays information on an operation of the laminating device 1 on a screen based on an instruction from the controller 90.

The recording head 32 is connected to the ASIC 95. The controller 90 outputs a signal corresponding to image data to the recording head 32 via the ASIC 95. The recording head 32 ejects ink from the plurality of nozzles 33 provided in the recording head 32 according to the signal output from the controller 90.

The medium sensor 35 is connected to the ASIC 95. The medium sensor 35 outputs a signal corresponding to the amount of the light received by the light receiving element. The controller 90 detects the end portions of the second member 102 and the third member 103 conveyed along the conveying path 16 based on the signal output from the medium sensor 35.

The holder motor 81, the conveying motor 82, the CR motor 83, the cutting motor 84, and the laminating motor 85 are connected to the ASIC 95. Driving circuits for controlling these motors are assembled in the ASIC 95. The controller 90 outputs a drive signal for causing each motor to rotate to a driving circuit corresponding to the motor. The driving circuit outputs a drive current corresponding to the drive signal output from the controller 90 to a corresponding motor. Accordingly, the corresponding motor rotates.

The controller 90 controls the holder motor 81 to cause the second holder 18 to rotate and cause the third member 103 drawn out from the second roll 112 to rewind around the second roll 112. The controller 90 controls the conveying motor 82 to drive the second draw-out roller 22, the fourth draw-out roller 24, and the second discharge roller 26. The controller 90 controls the CR motor 83 to move the carriage 31. The controller 90 controls the cutting motor 84 to move the cutter carriage 41 and the second cutting unit 70. The controller 90 controls the laminating motor 85 to cause the second laminating roller 52 to rotate. The laminating motor 85 is an example of a driving unit.

### [Processing by Controller 90]

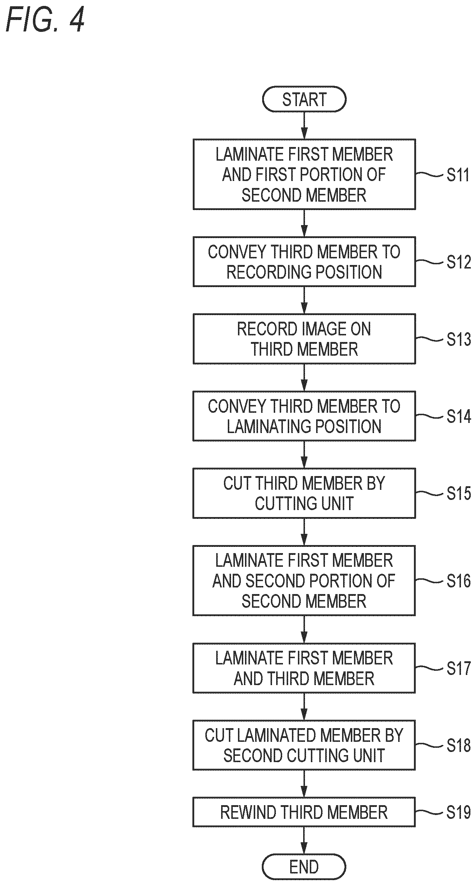

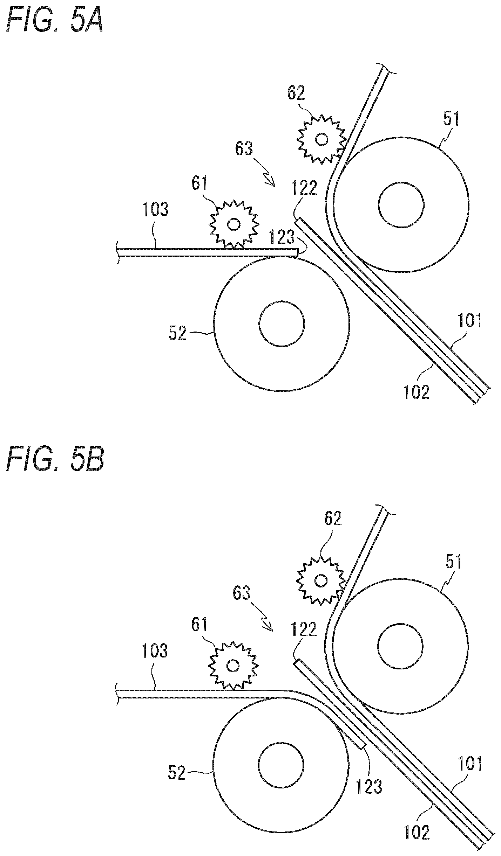

Processing by the controller 90 will be described with reference to FIG. 4. The process illustrated in FIG. 4 is executed by the controller 90 executing the programs stored in the RAM 93. The cutting unit 40 cuts the third member 103 into two portions along the left-right direction 9. Hereinafter, of the two portions obtained by the operation of the cutting unit 40, a portion located on the downstream side (front side in front-rear direction 8) is referred to as a "second member". In the drawings, the second member is denoted by a reference numeral 102 (see FIG. 5A and the like). Before the process illustrated in FIG. 4 is executed, a leading end of the second member 102 is located on a downstream side of the laminating unit 50 in the conveying path 16, and the leading end 123 of the third member 103 is located on an upstream side of the recording unit 30 in the conveying path 16.

At the beginning of the process illustrated in FIG. 4, the controller 90 causes the laminating unit 50 to laminate the first member 101 and a portion of the second member 102 including the leading end of the second member 102 (hereinafter, referred to as "first portion") (S11). In S11, the controller 90 drives the laminating motor 85 to cause the second laminating roller 52 to rotate, thereby laminating the first member 101 and the first portion of the second member 102. In this case, the first laminating roller 51 rotates as the second laminating roller 52 rotates.

In S11, when the second member 102 is conveyed by a predetermined feed amount from a position where the medium sensor 35 detects a tailing end 122 of the second member 102, the controller 90 stops driving the laminating motor 85. Accordingly, the controller 90 causes the tailing end 122 of the second member 102 to stop at a position to which the second member 102 is conveyed by a predetermined feed amount from the position where the medium sensor 35 detects the tailing end 122 of the second member 102.

Next, the controller 90 conveys the third member 103 to a recording position (S12). In S12, the controller 90 drives the conveying motor 82 to cause the fourth draw-out roller 24 to rotate, thereby conveying the third member 103 drawn out from the second roll 112 to the recording position above the platen 34. In this case, the second draw-out roller 22 is not driven, and the third draw-out roller 23 rotates as the fourth draw-out roller 24 rotates.

Next, the controller 90 causes the recording unit 30 to record an image on the first member 101 (S13). In S13, the controller 90 drives the CR motor 83 to supply data corresponding to the image to be recorded to the recording head 32 while moving the carriage 31 in the left-right direction 9, thereby recording the image on the third member 103 above the platen 34. When image recording for one pass is completed, the controller 90 drives the conveying motor 82 to cause the third draw-out roller 23 to rotate, thereby conveying the third member 103 along the conveying path 15 to a position where an image is to be recorded next. In this case, the second draw-out roller 22 is not driven, and the third draw-out roller 23 rotates as the fourth draw-out roller 24 rotates. After one image is recorded on the third member 103, the controller 90 proceeds to S14.

Next, the controller 90 conveys the third member 103 to a laminating position (S14). In S14, the controller 90 drives the conveying motor 82 to cause the fourth draw-out roller 24 to rotate, thereby conveying the third member 103 drawn out from the second roll 112 to the laminating position of the laminating unit 50. In this case, the first member 101 and the second member 102 are located between the first laminating roller 51 and the second laminating roller 52. In S14, the controller 90 brings the leading end 123 of the third member 103 close to the tailing end 122 of the second member 102 by the fourth draw-out roller 24 while holding the first member 101 and the second member 102 by the laminating unit 50 (see FIG. 5A).

Next, the controller 90 causes the cutting unit 40 to cut the third member 103 (S15). In S15, the controller 90 drives the cutting motor 84 to move the cutter carriage 41 in the left-right direction 9, thereby cutting the third member 103 on which the image has been recorded by the recording unit 30 in the left-right direction 9. Here, the third member 103 may not necessarily be cut at this timing. When an image to be recorded still remains in the third member 103, S15 is executed after S17.

Next, the controller 90 causes the laminating unit 50 to laminate the first member 101 and a portion of the second member 102 excluding the first portion (hereinafter, referred to as "second portion") (S16). In S16, the controller 90 drives the laminating motor 85 to cause the second laminating roller 52 to rotate, thereby laminating the first member 101 and the second portion of the second member 102. In S16, the controller 90 starts the operation of the laminating motor 85 after conveying the third member 103 by a predetermined feed amount from a position where the medium sensor 35 detects the leading end 123 of the third member 103. In this case, the first laminating roller 51 rotates as the second laminating roller 52 rotates.

Next, the controller 90 causes the laminating unit 50 to laminate the first member 101 and a portion of the third member 103 including the leading end 123 of the third member 103 (S17). In S17, the controller 90 drives the laminating motor 85 to cause the second laminating roller 52 to rotate, thereby laminating the first member 101 and the portion of the third member 103 including the leading end 123 of the third member 103. In this case, the first laminating roller 51 rotates as the second laminating roller 52 rotates. The controller 90 executes S16 and S17 in a continuous operation.

Next, the controller 90 causes the second cutting unit 70 to cut the member laminated by the laminating unit 50 (S18). In S18, the controller 90 drives the cutting motor 84 to cause the second cutting unit 70 to cut the member laminated by the laminating unit 50.

Next, the controller 90 rewinds the third member 103 to the second roll 112 (S19). In step S19, the controller 90 drives the holder motor 81 to cause the second holder 18 to rotate, thereby causing the member on an upstream side of the third member 103 cut by the cutting unit 40 to be rewound to the second roll 112. In this case, the controller 90 causes the member on the upstream side of the third member 103 to be rewound on an upstream side with respect to the recording unit 30 (to left side of recording unit 30 in FIG. 2). The controller 90 detects the leading end 123 of the third member 103 based on the signal output from the medium sensor 35. The controller 90 stops rewinding the third member 103 after the leading end 123 of the third member 103 is detected and the third member 103 is rewound by a predetermined amount.

### [Details of laminating unit 50]

Before the controller 90 executes the process illustrated in FIG. 4, the first member 101 and the second member 102 are located between the first laminating roller 51 and the second laminating roller 52. At the time when the controller 90 executes S11, the first member 101 and the first portion of the second member 102 including the tailing end 122 of the second member 102 are bonded by the laminating unit 50. In this case, the lamination surface 108 of the first member 101 faces rearward and downward. In addition, when the controller 90 executes step S14, the third member 103 is conveyed such that the leading end 123 of the third member 103 approaches the tailing end 122 of the second member 102. In this case, the lamination surface 109 of the third member 103 faces forward and upward.

The third member 103 has predetermined rigidity. Therefore, as illustrated in FIG. 5A, the tailing end 122 of the second member 102 separates from an outer peripheral surface of the second laminating roller 52 and floats from the outer peripheral surface of the second laminating roller. In the laminating unit 50, a space 63 that allows the tailing end 122 of the second member 102 that passes through the first guide member 61 to float is located on a side into which the first member 101 and the third member 103 enter (upper left portion of first laminating roller 51 and second laminating roller 52 in FIG. 5A).

When the controller 90 executes S14, the third member 103 is conveyed forward. In this case, since the tailing end 122 of the second member 102 floats in the space 63, the third member 103 enters under the second member 102. The first member 101 and the third member 103 are brought into close contact with each other and bonded to each other when passing between the first laminating roller 51 and the second laminating roller 52. The laminating unit 50 laminates the first member 101 and the third member 103 by bringing the lamination surface 108 of the first member 101 and the lamination surface 109 of the third member 103 into close contact with each other.

As described above, the controller 90 causes the laminating unit 50 to execute lamination in a state where the first member 101, the portion of the second member 102 including the tailing end 122 of the second member 102, and the portion of the third member 103 including the leading end 123 of the third member 103 overlap (see FIG. 5B). The laminating unit 50 laminates the first member 101, the second member 102, and the third member 103 in a state where the first member 101, the second member 102, and the third member 103 overlap in an order of the first member 101, the second member 102, and the third member 103.

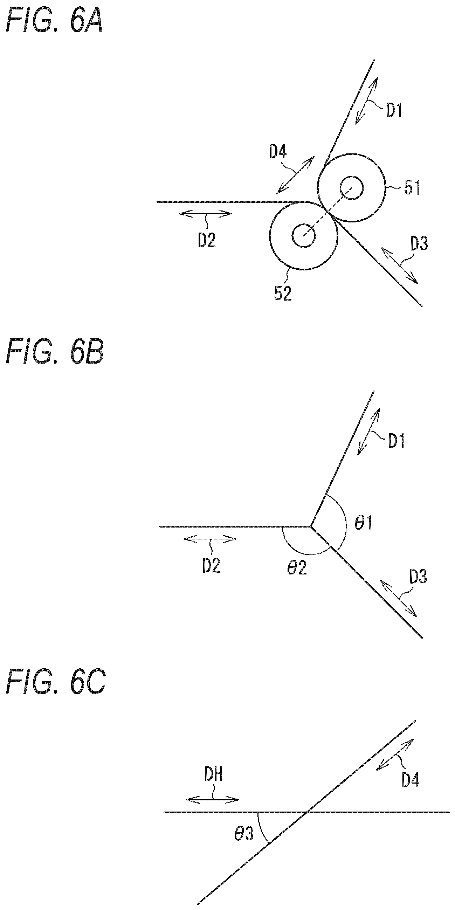

An angle in the laminating unit 50 will be described with reference to FIG. 6. As illustrated in FIG. 6A, a direction in which the first member 101 is conveyed toward the laminating unit 50 is referred to as a "first direction D1". A direction in which the second member 102 and the third member 103 are conveyed toward the laminating unit 50 is referred to as a "second direction D2". A direction in which the member obtained by laminating the first member 101, the second member 102, and the third member 103 is conveyed from the laminating unit 50 is referred to as a "third direction D3". A direction of a line segment connecting a center of the first laminating roller 51 and a center of the second laminating roller 52 is referred to as a "fourth direction D4".

In the laminating device 1, an angle θ1 formed by the first direction D1 and the third direction D3 is preferably an obtuse angle. The angle θ1 is preferably, for example, 135°. An angle θ2 formed by the second direction D2 and the third direction D3 is preferably an obtuse angle (see FIG. 6B). An acute angle θ3 formed by the horizontal direction DH and the fourth direction D4 is preferably 40° or more and 75° or less (see FIG. 6C). When the acute angle θ3 is too small, the third member 103 does not smoothly enter below the second member 102. On the other hand, when the acute angle θ is too large, the third member 103 does not smoothly enter between the second member 102 and the second laminating roller 52. Therefore, the acute angle θ3 is preferably 40° or more and 75° or less, for example, preferably 65°.

### [Details of Second Cutting Unit 70]

As described above, the second cutting unit 70 cuts the member obtained by laminating the plurality of members by the laminating unit 50. The laminating unit 50 executes the lamination in a state where the first member 101, the portion of the second member 102 including the tailing end 122 of the second member 102, and the portion of the third member 103 including the leading end 123 of the third member 103 overlap. When cutting the member obtained by laminating the first member 101, the second member 102, and the third member 103, the second cutting unit 70 cuts a portion other than a portion where all of the first member 101, the second member 102, and the third member 103 overlap.

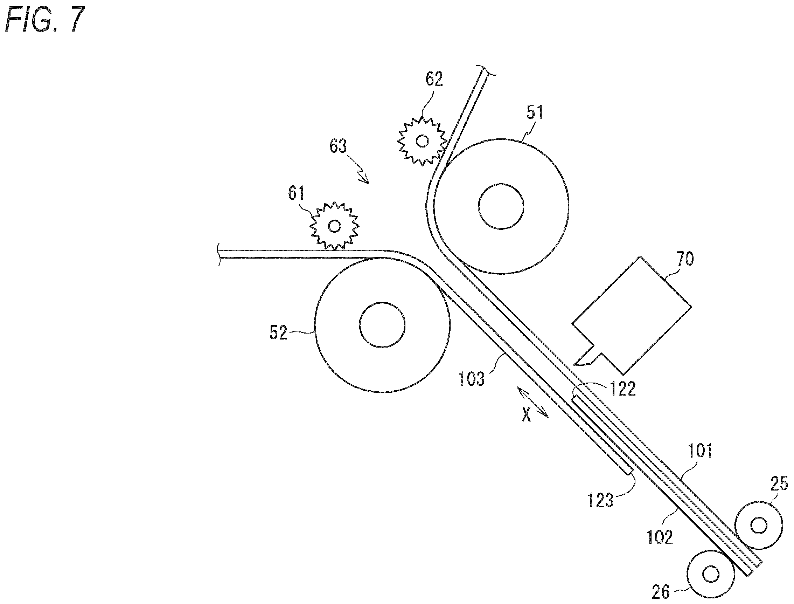

The portion other than the portion where all of the first member 101, the second member 102, and the third member 103 overlap is specifically a portion where the first member 101 and the second member 102 overlap or a portion where the first member 101 and the third member 103 overlap. In the example illustrated in FIG. 7, the second cutting unit 70 cuts the member obtained by laminating the first member 101, the second member 102, and the third member 103 in a portion X where the first member 101 and the third member 103 overlap and the second member 102 does not overlap.

In the above description, the conveying motor 82 drives the second draw-out roller 22 and the fourth draw-out roller 24, and the laminating motor 85 drives the second laminating roller 52. The present invention is not limited thereto, and the conveying motor 82 may drive at least one of the first draw-out roller 21 and the second draw-out roller 22, and may drive at least one of the third draw-out roller 23 and the fourth draw-out roller 24. For example, the conveying motor 82 may drive both the first draw-out roller 21 and the second draw-out roller 22, or may drive the first draw-out roller 21 and not drive the second draw-out roller 22. In addition, the laminating motor 85 may drive at least one of the first laminating roller 51 and the second laminating roller 52.

In a case where the laminating motor 85 drives both the first laminating roller 51 and the second laminating roller 52, when one of the laminating rollers is directly connected to the other laminating roller, a nip load may escape. Therefore, it is preferable to individually connect the two laminating rollers to the laminating motor 85. However, one of the laminating rollers may be directly connected to the other laminating roller.

### [Operation and Effect of Embodiment]

As described above, the laminating device 1 according to the present embodiment includes the laminating unit 50 configured to overlap and laminate the plurality of members, the conveying unit 20 configured to convey the plurality of members to the laminating unit 50, and the controller 90. The controller 90 causes the laminating unit 50 to execute the lamination in a state where the first member 101, the portion of the second member 102 including the tailing end 122 of the second member 102, and the portion of the third member 103 including the leading end 123 of the third member 103 overlap.

According to the laminating device 1 of the present embodiment, in a case where the first member 101 has the first adhesive layer 104 on the lamination surface 108, and the second member 102 and the third member 103 are laminated to the lamination surface 108 of the first member 101, lamination is executed in which the portion of the second member 102 including the tailing end 122 of the second member 102 and the portion of the third member 103 including the leading end of the third member 103 located upstream of the second member 102 in a conveyance direction overlap, so that no gap is formed between the second member 102 and the third member 103, and contact of the first adhesive layer 104 of the first member 101 with a component in the laminating unit 50 can be reduced.

In a laminating device including a laminating unit configured to laminate a plurality of members, a posture of a leading end of each member may not be stable when the leading end enters the laminating unit. In this case, lamination of the members cannot be correctly executed, which may cause misalignment of the lamination or increase in occurrence of jamming of the members. According to the laminating device 1 of the present embodiment, the contact of the adhesive layer of the member with the component in the laminating unit can be reduced, the accuracy of lamination can be improved, and the occurrence of jamming of the members can be reduced.

In S11, the controller 90 of the laminating device 1 causes the tailing end 122 of the second member 102 to stop at the position to which the second member 102 is conveyed by a predetermined feed amount from the position where the medium sensor 35 detects the tailing end 122 of the second member 102. Therefore, since the second member 102 is caused to stop at a position suitable for lamination based on the position where the medium sensor 35 detects the tailing end 122 of the second member 102, an overlapping state can be reproduced with high accuracy. In addition, since an overlapping distance can be reduced, waste of a material can be reduced.

In S16, the controller 90 of the laminating device 1 starts the operation of the laminating unit 50 after conveying the third member 103 by a predetermined feed amount from the position where the medium sensor 35 detects the leading end 123 of the third member 103. Therefore, since the operation of the laminating unit 50 is started after the third member 103 is conveyed by the predetermined feed amount based on the position where the medium sensor 35 detects the leading end 123 of the third member 103, the state in which the portion of the second member 102 including the tailing end 122 of the second member 102 and the portion of the third member 103 including the leading end 123 of the third member 103 overlap can be reproduced with high accuracy. In addition, since an overlapping distance can be reduced, waste of a material can be reduced.

The laminating unit 50 includes the roller pair including the first laminating roller 51 and the second laminating roller 52. Therefore, the first member 101, the portion of the second member 102 including the tailing end 122 of the second member 102, and the portion of the third member 103 including the leading end 123 of the third member 103 can be laminated by the two rollers. In addition, the laminating unit 50 laminates the first member 101, the second member 102, and the third member 103 in a state where the first member 101, the second member 102, and the third member 103 overlap in the order of the first member 101, the second member 102, and the third member 103 between the first laminating roller 51 and the second laminating roller 52. Therefore, in the laminating unit 50, the three members 101 to 103 are laminated in a state where the members 101 to 103 overlap in the order of the first member 101, the second member 102, and the third member 103. Accordingly, the lamination can be started by the leading end 123 of the third member 103 supplied from upstream coming into contact with the portion of the second member 102 including the tailing end 122 of the second member 102 without directly coming into contact with the lamination surface 108 having the first adhesive layer 104 of the first member 101, and thus the start of the laminating operation is stabilized.

The angle θ1 formed by the direction D1 (direction in which first member 101 is conveyed toward laminating unit 50) and the direction D2 (direction in which second member 102 and third member 103 are conveyed toward laminating unit 50) is an obtuse angle (FIG. 7B). Therefore, a force in a direction of separating the rollers from each other is less likely to act on the roller pair (first laminating roller 51 and second laminating roller 52) included in the laminating unit 50. In addition, the angle θ2 formed by the direction D2 and the direction D3 (direction in which member obtained by laminating first member 101, second member 102, and third member 103 is conveyed from laminating unit 50) is an obtuse angle (FIG. 7B).

Therefore, the portion of the third member 103 including the leading end 123 of the third member 103 easily enters under the portion of the second member 102 including the tailing end 122 of the second member 102.

Further, the acute angle θ3 formed by the horizontal direction DH and the fourth direction D4 (direction of line segment connecting center of the first laminating roller 51 and center of the second laminating roller 52) is 40° or more and 75° or less. Therefore, a force in a direction of separating the rollers from each other is less likely to act on the roller pair included in the laminating unit 50, and the portion of the third member 103 including the leading end 123 of the third member 103 easily enters below the portion of the second member 102 including the tailing end 122 of the second member 102.

The laminating device 1 includes the first guide member 61 that comes into contact with the lamination surface 109 on which the second member 102 and the third member 103 are laminated to the first member 101 and guides the second member 102 and the third member 103 toward the laminating unit 50. Therefore, since the second member 102 and the third member 103 can be guided toward the laminating unit 50 by the first guide member 61, positions of the leading ends of the second member 102 and the third member 103 conveyed to the laminating unit 50 are stabilized.

The space 63 that allows the tailing end 122 of the second member 102 that passes through the first guide member 61 to float is located between the first guide member 61 and the laminating unit 50. Therefore, since the second member 102 that passes through the first guide member 61 floats, the portion of the third member 103 including the leading end 123 of the third member 103 easily enters below the portion of the second member 102 including the tailing end 122 of the second member 102.

The laminating device 1 further includes the second guide member 62 that comes into contact with the lamination surface 108 of the first member 101 and guides the first member 101 toward the laminating unit 50. Therefore, since the first member 101 can be guided toward the laminating unit 50 by the second guide member 62, a position of the leading end of the first member 101 conveyed to the laminating unit 50 is stabilized.

The laminating device 1 includes the second cutting unit 70 that is located on the downstream side of the laminating unit 50 and configured to cut the member obtained by laminating the first member 101, the second member 102, and the third member 103. The second cutting unit 70 cuts the portion other than the portion where all of the first member 101, the second member 102, and the third member 103 overlap (specifically portion where first member 101 and second member 102 overlap or portion where first member 101 and third member 103 overlap). Therefore, deterioration of a cutting blade included in the second cutting unit 70 can be prevented. In addition, since a thickness of the portion to be cut is small, failure of cutting can be reduced and a cut cross section can be made clean. Further, cutting accuracy can be improved. However, the second cutting unit 70 may cut the portion where all of the first member 101, the second member 102, and the third member 103 overlap.

The second member 102 and the third member 103 are transparent films, and the laminating device 1 includes the recording unit 30 configured to record an image on the third member 103. Therefore, an image can be recorded on the third member 103 among the three members 101 to 103 to be laminated. In addition, since the transparent film is thin, a thickness of the overlapping portion can be prevented by overlapping the transparent films.

The laminating device 1 includes the laminating motor 85 configured to drive the second laminating roller 52, and the first laminating roller 51 is a driven roller that does not directly receive the power from the laminating motor 85. Therefore, the second laminating roller 52 is driven by the laminating motor 85, and the first laminating roller 51 can be caused to rotate as the second laminating roller 52 rotates. The laminating device 1 may include the laminating motor 85 configured to drive the first laminating roller 51 and the second laminating roller 52. Accordingly, the first laminating roller 51 and the second laminating roller 52 can be driven by the same laminating motor 85.

The laminating device 1 according to the present embodiment includes: the laminating unit 50 including the roller configured to overlap and laminate a plurality of members; the conveying unit 20 including the first conveying unit (first draw-out roller 21, second draw-out roller 22, and laminating unit 50) configured to convey the first member 101 to the laminating unit 50 and the second conveying unit (third draw-out roller 23, fourth draw-out roller 24, and laminating unit 50) configured to convey the second member 102 and the third member 103 to the laminating unit 50; and the controller 90. The controller 90 is configured to execute the first laminating operation (S11) in which the first conveying unit is caused to convey the first member 101 to the laminating unit 50, the second conveying unit is caused to convey the second member 102 to the laminating unit 50, and the first member 101 and the second member 102 are laminated, and execute the second laminating operation (S14 and S17) in which, after the first laminating operation is executed, the second conveying unit is caused to convey the third member 103 such that the leading end 123 of the third member 103 approaches the tailing end 122 of the second member 102 while the first member 101 and the second member 102 are held by the laminating unit 50, and the first member 101 and the third member 103 are laminated after the third member 103 is conveyed.

According to the laminating device 1 having the above configuration, in a case where the first member 101 has the first adhesive layer 104 on the lamination surface 108, and the second member 102 and the third member 103 are laminated to the lamination surface 108 of the first member 101, the first member 101 and the second member 102 are laminated, the leading end 123 of the third member 103 is brought close to the tailing end 122 of the second member 102 while the first member 101 and the second member 102 are held by the laminating unit 50, and the first member 101 and the third member 103 are laminated, so that a gap between the second member 102 and the third member 103 is reduced, and the contact of the first adhesive layer 104 of the first member 101 with a component in the laminating unit 50 can be reduced. In this configuration, the first member 101, the second member 102, and the third member 103 may not necessarily overlap.

In the first laminating operation, the controller 90 causes the operation of the laminating unit 50 to stop after the first member 101 and the first portion of the second member 102 including the leading end of the second member 102 are laminated (S11), and in the second laminating operation, the controller 90 executes the lamination of the first member 101 and the second portion being the portion excluding the first portion from the second member 102 (S16), and the lamination of the first member 101 and the third member 103 (S17) in a continuous operation. Therefore, by stopping the operation of the laminating unit 50 after the first member 101 and the first portion of the second member 102 are laminated, and then continuously executing the lamination of the first member 101 and the second portion of the second member 102 and the lamination of the first member 101 and the third member 103, the gap between the second member 102 and the third member 103 can be reduced, and the contact of the first adhesive layer 104 of the first member 101 with the component in the laminating unit 50 can be reduced.

### [Modification]

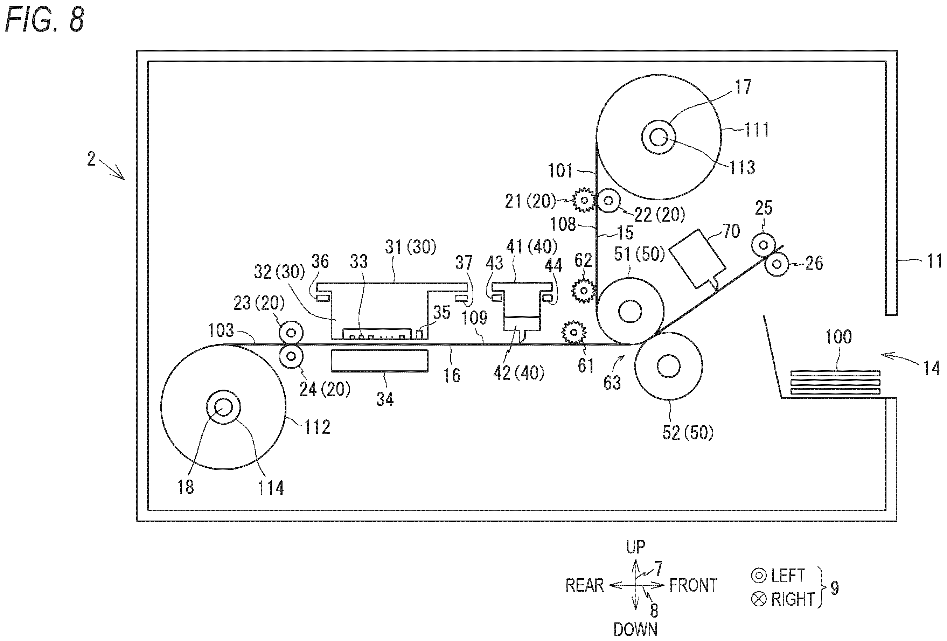

Various modifications can be made to the laminating device 1 according to the above embodiment. A laminating device 2 according to the modification illustrated in FIG. 8 is obtained by changing positions of the first laminating roller 51 and the second laminating roller 52 and the directions D1 to D4 in the laminating device 1.

In the laminating unit 50 of the laminating device 2, the first laminating roller 51 is located above the second laminating roller 52 in the up-down direction 7 and behind the second laminating roller 52 in the front-rear direction 8 with an interval corresponding to the thickness of the laminate finished product 100. The first draw-out roller 21 and the second draw-out roller 22 are located above the laminating unit 50 in the up-down direction 7 and slightly behind the laminating unit 50 in the front-rear direction 8. The second cutting unit 70, the first discharge roller 25, and the second discharge roller 26 are located above the laminating unit 50 in the up-down direction 7 and in front of the laminating unit 50 in the front-rear direction 8. The angle θ1 formed by the direction D1 and the direction D3 is an acute angle. The angle θ2 formed by the direction D2 and the direction D3 is larger than 180°.

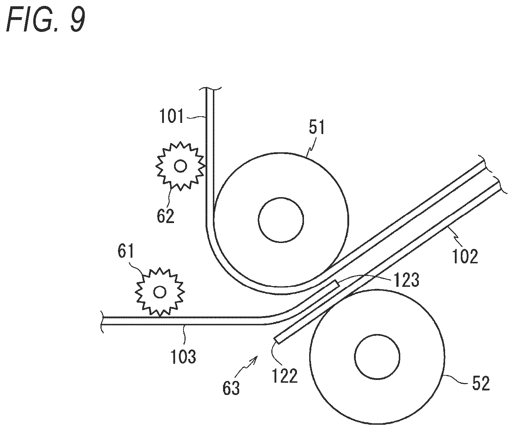

As illustrated in FIG. 9, in the laminating device 2, the tailing end 122 of the second member 102 separates from an outer peripheral surface of the second laminating roller 52 and floats from the outer peripheral surface of the second laminating roller. In the laminating unit 50, a space 63 that allows the tailing end 122 of the second member 102 that passes through the first guide member 61 to float is located on a side into which the first member 101 and the third member 103 enter (lower left portion of first laminating roller 51 and second laminating roller 52 in FIG. 9). When the third member 103 is conveyed toward the laminating unit 50, since the tailing end 122 of the second member 102 floats in the space 63, the third member 103 enters above the second member 102.

Therefore, the laminating unit 50 laminates the first member 101, the second member 102, and the third member 103 in a state where the first member 101, the second member 102, and the third member 103 overlap in an order of the first member 101, the third member 103, and the second member 102 between the first laminating roller 51 and the second laminating roller 52. Therefore, in the laminating unit 50, the three members 101 to 103 are laminated in a state where the three members 101 to 103 overlap in the order of the first member 101, the third member 103, and the second member 102. Accordingly, since the leading end 123 of the third member 103 supplied from upstream is conveyed between the lamination surface 108 having the first adhesive layer 104 of the first member 101 and the portion of the second member 102 including the tailing end 122 of the second member 102, the leading end 123 of the third member 103 can be brought into contact with an upstream position where the first member 101 and the second member 102 are laminated. Accordingly, accuracy of an overlapping distance can be improved.

The laminating device according to the modification may include, instead of the cutting unit 40 including the cutter carriage 41 and the cutter 42, a cutting unit 40 including a moving blade that moves in the up-down direction 7 and a fixed blade that faces the moving blade. The laminating device according to the modification may not include the second cutting unit 70. In this case, the member in which the three members 101 to 103 are laminated is discharged from the discharge port 14 without being cut. A user cuts the discharged member outside the laminating device using, for example, scissors.

The laminating device according to the modification may include a laminating unit including one laminating roller instead of the laminating unit 50 including the first laminating roller 51 and the second laminating roller 52. By disposing the one laminating roller at a suitable position in the housing 11, the first member 101 drawn out from the first roll 111 and the third member 103 that passes through the recording unit 30 and the cutting unit 40 can be laminated by the one laminating roller. The laminating device according to the modification may not include the first guide member 61. The laminating device according to the modification may not include the second guide member 62. The laminating device according to the modification may not include the first discharge roller 25 and the second discharge roller 26.

The laminating device according to the modification may include another sensor instead of the medium sensor 35 as the first sensor unit configured to detect the tailing end 122 of the second member 102. The laminating device according to the modification may include another sensor instead of the medium sensor 35 as the second sensor unit configured to detect the leading end 123 of the third member 103. The first sensor unit and the second sensor unit may be a common sensor or may be separate sensors. The first sensor unit and the second sensor unit may be sensors of the same type or sensors of different types.

The laminating device according to the modification may include a sensor that is not mounted on the carriage 31 and does not move (hereinafter, referred to as "fixed sensor") instead of the medium sensor 35. A type of the fixed sensor may be optional. The fixed sensor may be, for example, an optical sensor including a light emitting element and a light receiving element, similarly to the medium sensor 35. Such an optical sensor is provided on an upper side or a lower side of the conveying path 15. Alternatively, the fixed sensor may be a contact sensor configured to contact a left end or a right end of the first member 101 to detect an end portion of the first member 101. Such a contact sensor is provided on a left side or a right side of the conveying path 15.

The laminating device according to the modification may include a laminating unit including a belt instead of the laminating unit including the laminating roller. The angle θ1 formed by the direction D1 and the direction D2 is preferably an obtuse angle, but in the laminating device according to the modification, the angle θ1 may be 90° or an acute angle.

The laminating device according to the modification may include a laminating unit including a heating roll or a heating roll pair instead of the laminating unit 50. In this case, the first adhesive layer 104 of the first member 101 has adhesiveness by being heated by the heating roll or the heating roll pair. In addition to the first laminating roller 51 and the second laminating roller 52 (or instead of first laminating roller 51 and second laminating roller 52), the laminating unit of the laminating device according to the modification may include another roller necessary for laminating a plurality of members.

In the laminating device 1 according to the above embodiment, the second member 102 is a portion located on a downstream side, of the two portions obtained by cutting the third member 103 by the cutting unit 40, but the second member is not limited thereto. In the laminating device according to the modification, the second member may be, for example, a member that is independent of the third member 103 and is different from the third member 103. A material of the second member may be the same as or different from that of the third member 103. In the laminating device according to the modification, the conveying unit conveys the second member to the laminating unit separately from the third member 103.

The recording unit 30 of the laminating device 1 according to the above embodiment includes the recording head 32 that ejects ink, and records an image by a so-called serial ink jet method, but the configuration of the recording unit 30 is not limited thereto. The recording unit of the laminating device according to the modification may include, for example, a fixed inkjet recording head and record an image by a so-called line head method. In addition, the recording unit of the laminating device according to the modification may record an image by a so-called thermal head method. Further, the recording unit of the laminating device according to the modification may record an image by a so-called laser method in which toner is fixed to a recording medium using laser light.

### REFERENCE SIGNS LIST

1, 2: laminating device
20: conveying unit
30: recording unit
35: medium sensor (first sensor unit and second sensor unit)
40: cutting unit
50: laminating unit
51: first laminating roller (first roller)
52: second laminating roller (second roller)
61: first guide member (second guide unit)
62: second guide member (first guide unit)
63: space
70: second cutting unit (cutting unit)
85: laminating motor (driving unit)
90: controller
100: laminate finished product
101: first member
102: second member
103: third member
108, 109: lamination surface
122: tailing end
123: leading end

## Claims

1. A laminating device comprising:
a laminating unit configured to overlap and laminate a plurality of members;
a conveying unit configured to convey the plurality of members to the laminating unit; and
a controller,
wherein the controller is configured to cause the laminating unit to execute lamination in a state where a first member, a portion of a second member including a tailing end of the second member, and a portion of a third member including a leading end of the third member overlap.

2. The laminating device according to claim 1, further comprising:
a first sensor unit configured to detect the tailing end of the second member,
wherein the controller is configured to cause the tailing end of the second member to stop at a position to which the second member is conveyed by a predetermined feed amount from a position where the first sensor unit detects the tailing end of the second member.

3. The laminating device according to claim 1, further comprising:
a second sensor unit configured to detect the leading end of the third member,
wherein the controller is configured to cause an operation of the laminating unit to start after the third member is conveyed by a predetermined feed amount from a position where the second sensor unit detects the leading end of the third member.

4. The laminating device according to claim 1,
wherein the laminating unit comprises a roller pair, the roller pair comprising a first roller and a second roller.

5. The laminating device according to claim 4,
wherein the laminating unit is configured to laminate the first member, the second member, and the third member in a state where the first member, the second member, and the third member overlap in an order of the first member, the second member, and the third member between the first roller and the second roller.

6. The laminating device according to claim 4,
wherein the laminating unit is configured to laminate the first member, the second member, and the third member in a state where the first member, the second member, and the third member overlap in an order of the first member, the third member, and the second member between the first roller and the second roller.

7. The laminating device according to claim 1,
wherein an angle formed by a direction in which the first member is conveyed toward the laminating unit and a direction in which a member obtained by laminating the first member, the second member, and the third member is conveyed from the laminating unit is an obtuse angle.

8. The laminating device according to claim 1,
wherein an angle formed by a direction in which the second member and the third member are conveyed toward the laminating unit and a direction in which a member obtained by laminating the first member, the second member, and the third member is conveyed from the laminating unit is an obtuse angle.

9. The laminating device according to claim 4,
wherein an acute angle formed by a horizontal direction and a direction of a line segment connecting a center of the first roller and a center of the second roller is in a range of 40° to 75°.

10. The laminating device according to claim 1, further comprising:
a first guide unit configured to contact lamination surfaces of the second member and the third member, which are to be laminated to the first member, and guide the second member and the third member toward the laminating unit.

11. The laminating device according to claim 10,
wherein a space allowing the tailing end of the second member having passed through the first guide unit to float is located between the first guide unit and the laminating unit.

12. The laminating device according to claim 1, further comprising:
a second guide unit configured to contact a lamination surface of the first member and guide the first member toward the laminating unit.

13. The laminating device according to claim 1, further comprising:
a cutting unit on a downstream side of the laminating unit, the cutting unit being configured to cut a member obtained by laminating the first member, the second member, and the third member,
wherein the cutting unit is configured to cut a portion of the member other than a portion where all of the first member, the second member, and the third member overlap.

14. The laminating device according to claim 1,
wherein the second member and the third member are transparent films, and
wherein the laminating device further comprises a recording unit configured to record an image on the third member.

15. The laminating device according to claim 4, further comprising:
a driving unit configured to drive the second roller,
wherein the first roller is a driven roller that does not directly receive power from the driving unit.

16. The laminating device according to claim 4, further comprising:
a driving unit configured to drive the first roller and the second roller.

17. A laminating device comprising:
a laminating unit comprising a roller configured to overlap and laminate a plurality of members;
a conveying unit comprising a first conveying unit configured to convey a first member to the laminating unit and a second conveying unit configured to convey a second member and a third member to the laminating unit; and
a controller,
wherein the controller is configured to:
execute a first laminating operation comprising causing the first conveying unit to convey the first member to the laminating unit, causing the second conveying unit to convey the second member to the laminating unit, and laminating the first member and the second member;
cause, after the first laminating operation, the second conveying unit to convey the third member such that a leading end of the third member approaches a tailing end of the second member while the first member and the second member are held by the laminating unit; and
execute, after causing the third member to be conveyed, a second laminating operation comprising laminating the first member and the third member

18. The laminating device according to claim 17,
wherein the controller is configured to:
cause, in the first laminating operation, an operation of the laminating unit to stop after the first member and a first portion of the second member are laminated, the first portion comprising a leading end of the second member, and
execute, in the second laminating operation, lamination of the first member and a second portion of the second member, the second portion being a portion of the second member excluding the first portion, and lamination of the first member and the third member, such that the laminations are executed in a continuous operation.
